# EUROPÄISCHE PATENTSCHRIFT

(11) **EP 2 769 796 B1**
(45) Veröffentlichungstag und Bekanntmachung des Hinweises auf die Patenterteilung: **09.12.2015**
(21) Anmeldenummer: 14000328.6
(22) Anmeldetag: 29.01.2014
(51) Int. Cl.: B23K 7/00, B23K 26/00, B23K 26/38, B23Q 11/00, B26F 1/00, B26F 1/02, B23K 26/16, B21D 28/24, B21D 28/28, B21D 43/28

(54) **Verfahren und Vorrichtung zum Entsorgen von einem bei einem Lochungsvorgang eines Hohlprofils entstehenden Butzens**
Method of and device for the disposal of a slug that is formed during the process of perforating a hollow profile
Procédé et dispositif d'élimination d'une pastille formée lors d'un procédé de perforation d'un profil creux

(30) Priorität: 25.02.2013 DE 102013003118
(43) Veröffentlichungstag der Anmeldung: 27.08.2014
(73) Patentinhaber: JENOPTIK Automatisierungstechnik GmbH, 07745 Jena (DE)
(72) Erfinder: Nawrodt, Sebastian, 07629 Hermsdorf (DE); Heinig, Karsten, 07548 Gera (DE); Henning, Roland, 07749 Jena (DE); Steiner, Christoph, 07743 Jena (DE)
(74) Vertreter: Waldauf, Alexander

(56) Entgegenhaltungen:
- WO-A1-98/55244
- JP-A- H02 274 328
- JP-A- S58 125 320
- US-A- 4 644 128

## Beschreibung

Die vorliegende Erfindung bezieht sich auf ein Verfahren zum Entsorgen von einem bei einem Lochungsvorgang eines Hohlprofils entstehenden Butzens gemäß dem Oberbegriff des Patentanspruchs 1 und eine Vorrichtung zur Durchführung dieses Verfahrens gemäß dem Oberbegriff des Patentanspruchs 8 (siehe, z.B., US 4 644 128).

Aus dem Stand der Technik ist beispielsweise aus der DE 42 02 984 A1 ein Verfahren zum Entsorgen von Butzen beim robotergeführten Laserschneiden von Löchern an dünnwandigen Blechteilen bekannt, bei dem der auszuschneidende Butzen vor dem Beginn des Abfahrens der Loch- oder Butzenkonturbahn mit einem durch Ausbrennen mittels Laserstrahl hergestellten Greifloch versehen wird, das die Lochkonturbahn nicht tangiert und in das ein Greifwerkzeug zu einem Zeitpunkt eingeführt wird, bei dem das Greifloch hierfür zugänglich, der Butzen aber noch nicht vollständig ausgeschnitten ist und wobei das Greifwerkzeug den Butzen bis zur Ablage in einem Behälter gegriffen hält.

Ferner ist aus der DE 39 37 460 A1 ein Verfahren zum Anbringen von Öffnungen in einem Hohlprofil mittels einer Lasereinrichtung bekannt. Um die bei dem Laserschneidverfahren entstehenden Butzen zu entsorgen, wird das Hohlprofil von einer Flüssigkeit blasenfrei durchströmt. Das von dem Laserstrahl aus dem Schnittspalt ausgebrannte Material und der aus der Austrittsöffnung freigelegte Butzen werden in der Flüssigkeit aufgefangen, abgekühlt und fortgeschwemmt. Bei der Flüssigkeit kann es sich beispielsweise um Wasser handeln. Nachteilig an diesem Verfahren ist, dass bei sich verjüngenden oder leicht gekrümmten Hohlprofilen die Gefahr besteht, dass die entsorgten Butzen an der sich verjüngenden Stelle im Hohlprofil hängenbleiben und somit nicht fortgeschwemmt werden.

Ferner ist aus der JP S58 125320 A ein Stanzverfahren mittels eines Lochers bekannt. Die WO 98/55244 offenbart ferner ein Stanzverfahren an einem Werkstück, wobei eine Aufnahmevorrichtung die ausgestanzten Teile aus dem Werkstück abtransportiert. Die US 4 644 128 offenbart eine Laservorrichtung zum Schneiden von Öffnungen in gekrümmten Rohren.

Es ist daher Aufgabe der vorliegenden Erfindung ein verbessertes, prozesssicheres Verfahren zur Verfügung zu stellen, das die genannten Nachteile vermeidet. Diese Aufgabe wird durch ein Verfahren gemäß Anspruch 1 und einer Vorrichtung zur Durchführung des Verfahrens gemäß Anspruch 8 gelöst. Vorteilhafte Weiterbildungen werden durch die abhängigen Ansprüche näher definiert.

In einem Grundgedanken der Erfindung weist ein Verfahren zum Entsorgen von einem bei einem Lochungsvorgang eines Hohlprofils entstehenden Butzens gemäß Anspruch 1 folgende Merkmale auf: Bereitstellen eines Hohlprofils; Schneiden zumindest einer vorgebbaren Loch- oder Butzenkonturbahn in das Hohlprofil mittels einer Schneidvorrichtung; Stehen lassen eines Reststeges der Loch- oder Butzenkonturbahn; Einfahren einer Aufnahmevorrichtung in das Hohlprofil; Bewegen eines Stempels von einer ersten Position in eine den Reststeg entfernende zweite Position, derart, dass der dabei entstehende Butzen durch die Aufnahmevorrichtung aufgenommen wird; Ausfahren der Aufnahmevorrichtung aus dem Hohlprofil. Durch eine erfindungsgemäße Aufnahmevorrichtung die während des Verfahrens in das Hohlprofil ein- beziehungsweise ausfährt, um den oder die Butzen aufzunehmen, wird somit gewährleistet, dass alle bei einem Schneidvorgang entstehenden Butzen entsorgt werden.

In einer bevorzugten Ausführungsform erfolgt der Schritt des Ausfahrens der Aufnahmevorrichtung aus dem Hohlprofil in der zweiten Position des Stempels. Mit anderen Worten: Während die Aufnahmevorrichtung aus dem Hohlprofil ausfährt, wird die durch den Stempel erzeugte Öffnung durch den Stempel verschlossen. Somit wird sichergestellt, dass keine Butzen durch die erzeugte Öffnung außerhalb des Hohlprofils gelangen.

In einer weiteren bevorzugten Ausführungsform wird die Aufnahmevorrichtung durch eine erste Steuervorrichtung gesteuert und der Schritt des Einfahrens umfasst ferner das Merkmal, dass die Aufnahmevorrichtung durch die erste Steuervorrichtung derart gesteuert wird, dass sie ober- und/ oder unterhalb einer Loch- oder Butzenkonturbahn positioniert wird. Somit wird durch die Steuervorrichtung sichergestellt, dass die Aufnahmevorrichtung lagerichtig zur Aufnahme eines Butzens ausgerichtet ist.

In einer weiteren bevorzugten Ausführungsform wird nach dem Ausfahren der Aufnahmevorrichtung der zumindest eine Butzen aus der Aufnahmevorrichtung entsorgt, insbesondere abgesaugt.

In einer weiteren bevorzugten Ausführungsform wird die Anzahl der entsorgten Butzen mittels einer Detektoreinheit detektiert und mit einer Anzahl an vorgegebenen Loch- oder Butzenkonturbahnen verglichen. Mit einer derartigen Detektoreinheit kann somit festgestellt werden, ob sämtliche aus dem Hohlprofil ausgeschnittenen Butzen entsorgt wurden.

Eine weitere bevorzugten Ausführungsform ist dadurch gekennzeichnet, dass der Schritt des Schneidens das Schneiden von zumindest zwei diametral gegenüberliegenden Loch- oder Butzenkonturbahnen umfasst und ein erster Stempel von einer ersten Position in eine einen ersten Reststeg einer ersten Loch- oder Butzenkonturbahn entfernende zweite Position derart bewegt wird, dass der dabei entstehende erste Butzen an einer Oberseite der Aufnahmevorrichtung aufgenommen wird und dass ein zweiter Stempel von einer ersten Position in eine einen zweiten Reststeg einer zweiten Loch- oder Butzenkonturbahn entfernende zweite Position derart bewegt wird, dass der dabei entstehende zweite Butzen an einer Unterseite der Aufnahmevorrichtung aufgenommen wird. Mit einer derartigen Ausführungsform ist es möglich in die diametral gegenüberliegenden Öffnungen eine Buchse oder ähnliche Elemente einzusetzen.

In einer weiteren bevorzugten Ausführungsform wird die Schneidvorrichtung durch eine zweite Steuervorrichtung gesteuert und zwar derart, dass der Schritt des Stehenlassens des Reststeges derart bewirkt wird, dass die Loch- oder Butzenkonturbahn in einem Endbereich von der übrigen Loch- oder Butzenkontur wegführt.

In einer weiteren bevorzugten Ausführungsform wird das Verfahren in einem oder beiden Endbereichen des Hohlprofils angewandt. In einem derartigen Bereich kann die durch die Steuervorrichtung gesteuerte Aufnahmevorrichtung besonders einfach in das Hohlprofil eingefahren werden.
- Die Erfindung beansprucht auch eine Vorrichtung zur Durchführung eines erfindungsgemäßen Verfahrens gemäß Anspruch 8, mit folgenden Merkmalen:
   - einer Schneidvorrichtung, insbesondere einer Lasereinrichtung, zum Schneiden einer vorgebbaren Loch- oder Butzenkonturbahn in das Hohlprofil;
   - einer Aufnahmevorrichtung zum Aufnehmen eines mittels der Schneidvorrichtung zumindest bereichsweise ausgeschnittenen und mittels eines Stempels vom übrigen Hohlprofil entfernten Butzens;
   - einer ersten Steuervorrichtung zum Steuern der Aufnahmevorrichtung;
   - einer zweiten Steuervorrichtung zum Steuern der Schneidvorrichtung;
   - einer dritten Steuervorrichtung zum Steuern des zumindest einen Stempels.

In einer bevorzugten Ausführungsform weist die Aufnahmevorrichtung zumindest eine Aufnahmenut zum Aufnehmen des zumindest einen Butzens auf. Somit wird sichergestellt, dass der zumindest eine Butzen beim Transport nicht aus der Aufnahmevorrichtung herausgeworfen wird.

In einer weiteren bevorzugten Ausführungsform ist die Aufnahmevorrichtung zumindest bereichsweise aus Kunststoff oder metallisch, insbesondere magnetisch, ausgebildet. Somit wird eine besonders einfache und kostengünstig herstellbare Aufnahmevorrichtung zur Verfügung gestellt. Durch eine zumindest bereichsweise magnetische Aufnahmevorrichtung kann zudem eine noch prozesssichere Aufnahmevorrichtung zur Verfügung gestellt werden.

In einer weiteren bevorzugten Ausführungsform ist der zumindest eine Stempel keilförmig ausgebildet. Durch eine derartige Form des Stempels können besonders vorteilhaft Butzen aus dem Hohlprofil herausgetrennt werden.

In einer weiteren bevorzugten Ausführungsform ist die Außenkontur der Aufnahmevorrichtung zumindest bereichsweise an die Innenkontur des Hohlprofils angepasst. Durch eine derartige Form der Aufnahmevorrichtung wird verhindert, dass die aufgenommenen Butzen beim Transport aus dem Hohlprofil aus den Aufnahmenuten herausfallen können und im Hohlprofil verbleiben.

In einer weiteren bevorzugten Ausführungsform umfasst die Vorrichtung ferner eine Absaugeinheit zum Absaugen des zumindest einen Butzens aus der Aufnahmevorrichtung.

Es versteht sich, dass die eben beschriebenen Ausführungsformen in Alleinstellung oder in Kombination untereinander dargestellt werden können.

Vorteilhafte Ausführungsbeispiele der vorliegenden Erfindung werden nachfolgend Bezug nehmend auf die beiliegenden Zeichnungen näher erläutert. Es zeigen:
- Fig. 1a: schematischer Aufbau eines erfindungsgemäßen Verfahrens zum Entsorgen von einem bei einem Lochungsvorgang eines Hohlprofils entstehenden Butzens, wobei sich ein Stempel in einer ersten Position befindet;
- Fig. 1b: schematischer Aufbau eines erfindungsgemäßen Verfahrens zum Entsorgen von einem bei einem Lochungsvorgang eines Hohlprofils entstehenden Butzens, wobei sich ein Stempel in einer den Reststeg entfernenden zweiten Position befindet;
- Fig. 2: Perspektivansicht einer Aufnahmevorrichtung zum Entfernen des Butzens aus dem Hohlprofil;
- Fig. 3a: schematische Skizze einer erfindungsgemäßen Loch- oder Butzenkonturbahn;
- Fig. 3b: schematische Skizze der erzeugten Öffnung, nachdem der Reststeg entfernt wurde;

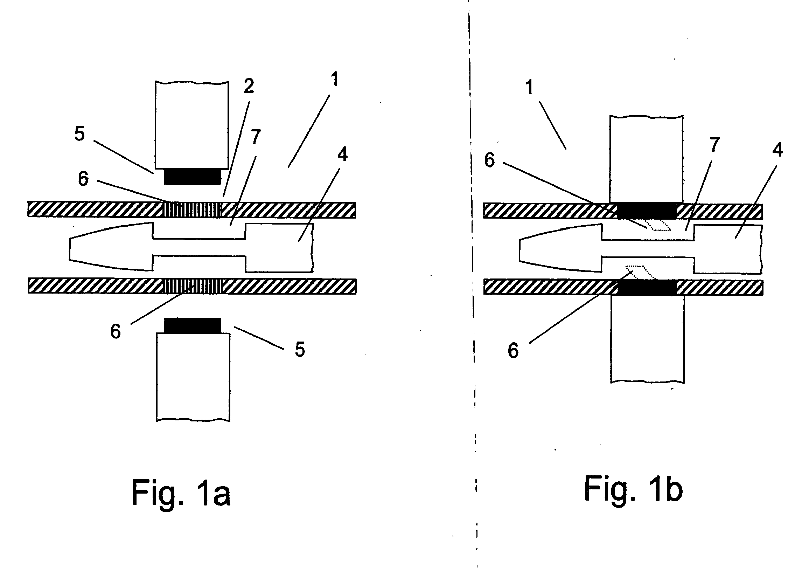

Die Fig. 1a und Fig. 1b zeigen in Kombination das Grundprinzip eines erfindungsgemäßen Verfahrens zum Entsorgen von einem bei einem Lochungsvorgang eines Hohlprofils 1 entstehenden Butzens 6. Bei dem Hohlprofil kann es sich beispielsweise um einen Querträger eines Kraftfahrzeuges handeln. Zur Aufnahme von Buchsen in den Querträger werden Öffnungen benötigt, die durch das erfindungsgemäße Verfahren bereitgestellt werden können.

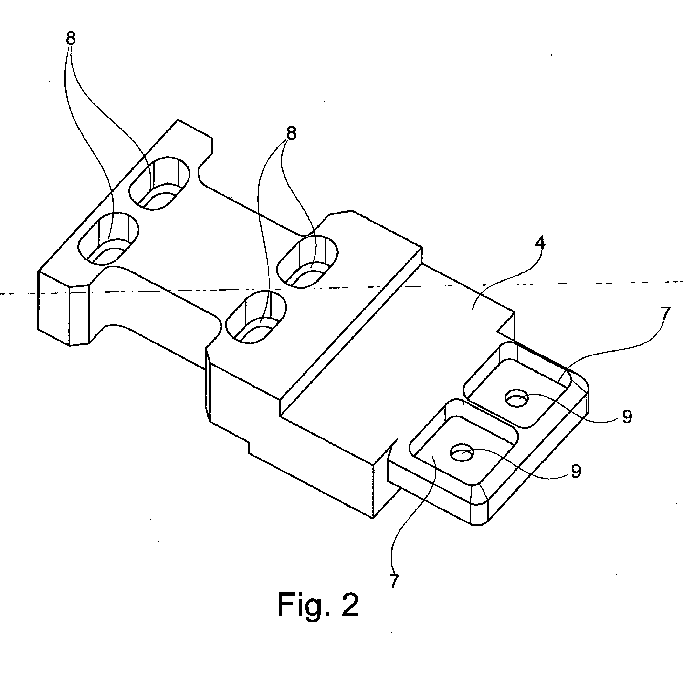

Kernstück der Erfindung ist eine Aufnahmevorrichtung 4, die dazu ausgelegt ist, in das Hohlprofil eingefahren werden zu können. Dazu ist eine nicht näher dargestellte erste Steuervorrichtung vorgesehen, die die Bewegung der Aufnahmevorrichtung steuert und an eine vorgebbare Position im Hohlprofil bewegt. Die Aufnahmevorrichtung 4, die auch nochmals in einer Perspektivansicht in Fig. 2 dargestellt ist, ist hierbei über Bohrungen 8 kraftschlüssig mit der nicht dargestellten Steuervorrichtung verbunden.

Das erfindungsgemäße Verfahren funktioniert nun wie folgt. Zunächst wird in einem ersten Verfahrensschritt mittels einer nicht näher dargestellten Schneidvorrichtung eine Loch- oder Butzenkonturbahn 2 in das Hohlprofil 1 geschnitten. Bei der Schneidvorrichtung kann es sich beispielsweise um eine Lasereinrichtung handeln. Aber auch andere Schneidvorrichtungen sind denkbar. Die Schneidvorrichtung wird durch eine ebenfalls nicht näher dargestellte zweite Steuervorrichtung gesteuert.

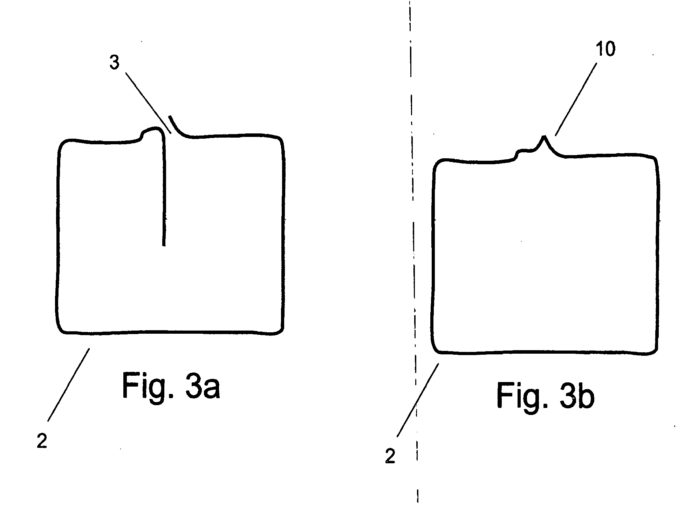

Wichtig in diesem Zusammenhang ist, dass die Schneidvorrichtung keine zusammenhängende Loch- oder Butzenkonturbahn 2 in das Hohlprofil schneidet, sondern derart gesteuert wird, dass gemäß der Erfindung ein Reststeg 3 verbleibt (siehe Fig. 3a). Dieser Reststeg 3 dient dazu, dass der aus dem Hohlprofil auszuschneidende Butzen 6 zunächst in seiner Ausgangsposition verbleibt. Eine erfindungsgemäße Loch- oder Butzenkonturbahn ist der Fig. 3a zu entnehmen.

In einem zweiten Verfahrensschritt wird nun die Aufnahmevorrichtung in das Hohlprofil, wie oben bereits erläutert, eingefahren und gemäß Fig. 1a unterhalb einer der mit der Schneidvorrichtung geschnittenen Loch- oder Butzenkonturbahn positioniert. Die Aufnahmevorrichtung weist eine Aufnahmenut 7 auf, die ausgelegt ist, einen oder mehrere Butzen aufzunehmen. Beispielsweise kann die Aufnahmevorrichtung 4 auf beiden Seiten jeweils zwei Aufnahmenuten 7 aufweisen, wie dies in einer Perspektivansicht in Fig. 2 dargestellt ist. Somit ist es möglich, insgesamt vier Butzen aus dem Hohlprofil zu transportieren.

In einem dritten Verfahrensschritt wird anschließend ein Stempel 5 aus einer ersten Position mittels einer dritten Steuervorrichtung in eine zweite Position gefahren und zwar derart, dass auch der noch verbleibende Reststeg 3 vom Hohlprofil 1 getrennt wird. Damit fällt der dabei entstehende Butzen 6 in die Aufnahmenut 7 der vorpositionierten Aufnahmevorrichtung 4. Wie der Fig. 3a zu entnehmen ist, führt die Loch- oder Butzenkonturbahn 2 an ihrem Ende im Bereich des Steges 3 von der übrigen Konturbahn weg.

Somit wird, nachdem der Butzen durch den Stempel vom Hohlprofil entfernt wurde, eine Nase 10 erzeugt, die nach außen zeigt. Eine derartige Konturbahn hat den Vorteil, dass Buchsen oder andere Elemente in die Öffnungen eingesetzt werden können, ohne dass nach innen abstehende Nasen, dieses Einsetzen behindern oder gar unmöglich machen würden.

In einem vierten Verfahrensschritt wird die Aufnahmevorrichtung 4 aus dem Hohlprofil 1 herausgefahren. Erfindungsgemäß ist hierbei vorgesehen, dass dieser Verfahrenschritt in der zweiten Position des Stempels gemäß Fig. 3b erfolgt.

In einem abschließenden fünften Verfahrensschritt werden die Butzen aus den jeweiligen Aufnahmenuten abgesaugt oder ausgeblasen. Dafür können zusätzliche Öffnungen 9 in den Aufnahmenuten 7 vorgesehen sein. Die Butzen, die an einer Unterseite der Aufnahmevorrichtung durch entsprechende Aufnahmenuten 4 aufgenommen worden sind, werden beim Herausfahren der Aufnahmevorrichtung aus dem Hohlprofil 1 bereits durch die Schwerkraft entsorgt.

## Patentansprüche

1. Verfahren zum Entsorgen von einem bei einem Lochungsvorgang eines Hohlprofils entstehenden Butzens, umfassend folgende Merkmale:
a) Bereitstellen eines Hohlprofils (1); **gekennzeichnet durch** folgende Schritte:
b) Schneiden zumindest einer vorgebbaren Loch- oder Butzenkonturbahn (2) in das Hohlprofil mittels einer Schneidvorrichtung;
c) Stehen lassen eines Reststeges (3) der Loch- oder Butzenkonturbahn (2), so dass dieser aus dem Hohlprofil (1) auszuschneidende Butzen (6) zunächst in seiner Ausgangposition verbleibt,
d) Einfahren einer Aufnahmevorrichtung (4) in das Hohlprofil;
e) Bewegen eines Stempels (5) von einer ersten Position in eine den Reststeg entfernende zweite Position, derart, dass der dabei entstehende Butzen (6) **durch** die Aufnahmevorrichtung aufgenommen wird;
f) Ausfahren der Aufnahmevorrichtung (4) aus dem Hohlprofil (1).

2. Verfahren nach Anspruch 1, **dadurch gekennzeichnet, dass** der Schritt f) des Ausfahrens der Aufnahmevorrichtung (4) aus dem Hohlprofil (1) in der zweiten Position des Stempels erfolgt.

3. Verfahren nach Anspruch 1 oder 2, **dadurch gekennzeichnet, dass** die Aufnahmevorrichtung (4) durch eine erste Steuervorrichtung gesteuert wird und der Schritt d) des Einfahrens ferner das Merkmal umfasst, dass die Aufnahmevorrichtung durch die Steuervorrichtung derart gesteuert wird, dass sie ober- und/ oder unterhalb einer Loch- oder Butzenkonturbahn (2) positioniert wird.

4. Verfahren nach einem der vorhergehenden Ansprüche, **dadurch gekennzeichnet, dass** nach dem Ausfahren der zumindest eine Butzen (6) aus der Aufnahmevorrichtung (4) entsorgt, insbesondere abgesaugt, wird.

5. Verfahren nach einem der vorhergehenden Ansprüche, **dadurch gekennzeichnet, dass** die Anzahl der entsorgten Butzen (6) mittels einer Detektoreinheit detektiert wird und mit einer Anzahl an vorgegebenen Loch- oder Butzenkonturbahnen (2) verglichen wird.

6. Verfahren nach einem der vorhergehenden Ansprüche, **dadurch gekennzeichnet, dass** der Schritt b) des Schneidens das Schneiden von zumindest zwei diametral gegenüberliegenden Loch- oder Butzenkonturbahnen (2) umfasst und der Schritt e) derart ausgeführt wird, dass ein erster Stempel (5) von einer ersten Position in eine einen ersten Reststeg einer ersten Loch- oder Butzenkonturbahn entfernende zweite Position derart bewegt wird, dass der dabei entstehende erste Butzen an einer Oberseite der Aufnahmevorrichtung aufgenommen wird und dass ein zweiter Stempel (5) von einer ersten Position in eine einen zweiten Reststeg einer zweiten Loch- oder Butzenkonturbahn entfernende zweite Position derart bewegt wird, dass der dabei entstehende zweite Butzen an einer Unterseite der Aufnahmevorrichtung (4) aufgenommen wird.

7. Verfahren nach einem der vorhergehenden Ansprüche, **dadurch gekennzeichnet, dass** die Schneidvorrichtung durch eine zweite Steuervorrichtung gesteuert wird und die zweite Steuervorrichtung die Schneidvorrichtung derart steuert, dass der Schritt c) des Stehenlassens des Reststeges derart bewirkt wird, dass die Loch- oder Butzenkonturbahn in einem Endbereich von der übrigen Loch- oder Butzenkontur wegführt.

8. Vorrichtung zum Durchführen eines Verfahrens nach einem der Ansprüche 1 bis 7 mit folgenden Merkmalen:
- einer Schneidvorrichtung, insbesondere einer Lasereinrichtung, zum Schneiden einer vorgebbaren Loch- oder Butzenkonturbahn (2) in das Hohlprofil; **gekennzeichnet durch** folgende Merkmale:
- einer Aufnahmevorrichtung (4) zum Aufnehmen eines mittels der Schneidvorrichtung zumindest bereichsweise ausgeschnittenen und mittels eines Stempels (5) vom übrigen Hohlprofil (1) entfernten Butzens;
- einer ersten Steuervorrichtung zum Steuern der Aufnahmevorrichtung (4);
- einer zweiten Steuervorrichtung zum Steuern der Schneidvorrichtung um einen Reststeg (3) an der Loch- oder Butzen konturbahn zu behalten, so dass der aus dem Hohlprofil (1) auszuschneidende Butzen (6) zunächst in seiner Ausgangposition verbleibt;
- einer dritten Steuervorrichtung zum Steuern des zumindest einen Stempels (5).

9. Vorrichtung nach Anspruch 8, **dadurch gekennzeichnet, dass** die Aufnahmevorrichtung zumindest eine Aufnahmenut (7) zum Aufnehmen des zumindest einen Butzens aufweist.

10. Vorrichtung nach einem der Ansprüche 8 oder 9, **dadurch gekennzeichnet, dass** die Vorrichtung ferner eine Absaugeinheit zum Absaugen des zumindest einen Butzens aus der Aufnahmevorrichtung (4) umfasst.

## Claims

1. Method for disposing of a slug produced in a hole punching operation on a hollow profile, comprising the following features:
a) providing a hollow profile (1); **characterized by** the following steps:
b) cutting at least one predeterminable hole or slug contour path (2) into the hollow profile by means of a cutting device;
c) leaving a residual web (3) of the hole or slug contour path (2), so that this slug (6) to be cut out from the hollow profile (1) initially remains in its starting position;
d) moving a receiving device (4) into the hollow profile;
e) moving a punch (5) from a first position into a residual-web-removing second position in such a way that the slug (6) thereby produced is received by the receiving device;
f) moving the receiving device (4) out of the hollow profile (1).

2. Method according to Claim 1, **characterized in that** the step f) of moving the receiving device (4) out of the hollow profile (1) is performed in the second position of the punch.

3. Method according to Claim 1 or 2, **characterized in that** the receiving device (4) is controlled by a first control device and the moving-in step d) also comprises the feature that the receiving device is controlled by the control device in such a way that it is positioned above and/or below a hole or slug contour path (2).

4. Method according to one of the preceding claims, **characterized in that**, after the moving out, the at least one slug (6) is removed from the receiving device (4), in particular extracted by suction.

5. Method according to one of the preceding claims, **characterized in that** the number of slugs (6) removed is detected by means of a detector unit and compared with a number of predetermined hole or slug contour paths (2).

6. Method according to one of the preceding claims, **characterized in that** the cutting step b) comprises the cutting of at least two diametrically opposed hole or slug contour paths (2) and the step e) is performed in such a way that a first punch (5) is moved from a first position into a second position, removing a first residual web of a first hole or slug contour path, in such a way that the first slug thereby produced is received on an upper side of the receiving device, and a second punch (5) is moved from a first position into a second position, removing a second residual web of a second hole or slug contour path, in such a way that the second slug thereby produced is received on an underside of the receiving device (4).

7. Method according to one of the preceding claims, **characterized in that** the cutting device is controlled by a second control device and the second control device controls the cutting device in such a way that the step c) of leaving the residual web is brought about in such a way that, in an end region, the hole or slug contour path leads way from the rest of the hole or slug contour.

8. Device for carrying out a method according to one of Claims 1 to 7 with the following features:
- a cutting device, in particular a laser device, for cutting a predeterminable hole or slug contour path (2) into the hollow profile; **characterized by** the following steps:
- a receiving device (4) for receiving a slug cut out at least in certain regions by means of the cutting device and removed from the rest of the hollow profile (1) by means of a punch (5);
- a first control device for controlling the receiving device (4);
- a second control device for controlling the cutting device in order to retain a residual web (3) on the hole or slug contour path, so that the slug (6) to be cut out from the hollow profile (1) initially remains in its starting position;
- a third control device for controlling the at least one punch (5).

9. Device according to Claim 8, **characterized in that** the receiving device has at least one receiving recess (7) for receiving the at least one slug.

10. Device according to either of Claims 8 and 9, **characterized in that** the device also comprises a suction extraction unit for extracting the at least one slug from the receiving device (4).

## Revendications

1. Procédé d'élimination d'une pastille formée lors d'une opération de perforation d'un profilé creux, comprenant les caractéristiques suivantes:
a) mise à disposition d'un profilé creux (1);
**caractérisé par** les étapes suivantes:
b) coupe d'au moins un tracé de contour de perforation ou de pastille (2) prévisible dans le profilé creux au moyen d'un dispositif de coupe;
c) dressage d'une nervure résiduelle (3) du tracé de contour de perforation ou de pastille (2), de telle manière que cette pastille (6) à découper hors du profilé creux (1) reste d'abord dans sa position initiale;
d) introduction d'un dispositif de réception (4) dans le profilé creux;
e) déplacement d'un poinçon (5) d'une première position à une deuxième position enlevant la nervure résiduelle, de telle manière que la pastille ainsi formée (6) soit réceptionnée par le dispositif de réception;
f) retrait du dispositif de réception (4) hors du profilé creux (1).

2. Procédé selon la revendication 1, **caractérisé en ce que** l'étape f) de retrait du dispositif de coupe (4) hors du profilé creux (1) est effectuée dans la deuxième position du poinçon.

3. Procédé selon la revendication 1 ou 2, **caractérisé en ce que** le dispositif de réception (4) est commandé par un premier dispositif de commande et l'étape d) d'introduction comprend en outre la caractéristique que le dispositif de réception est commandé par le dispositif de commande, de telle manière qu'il soit positionné au-dessus et/ou en dessous d'un tracé de contour de perforation ou de pastille (2).

4. Procédé selon l'une quelconque des revendications précédentes, **caractérisé en ce qu'**après le retrait ladite au moins une pastille (6) est éliminée, notamment aspirée, hors du dispositif de réception (4).

5. Procédé selon l'une quelconque des revendications précédentes, **caractérisé en ce que** le nombre des pastilles (6) éliminées est détecté au moyen d'une unité de détecteur et est comparé à un nombre prédéterminé de tracés de contour de perforation ou de pastille (2).

6. Procédé selon l'une quelconque des revendications précédentes, **caractérisé en ce que** l'étape b) de coupe comprend la coupe d'au moins deux tracés de contour de perforation ou de pastille (2) diamétralement opposés et l'étape e) est exécutée de telle manière qu'un premier poinçon (5) soit déplacé d'une première position à une deuxième position enlevant une première nervure résiduelle d'un premier tracé de contour de perforation ou de pastille, de telle manière que la première pastille ainsi formée soit réceptionnée sur un côté supérieur du dispositif de réception, et qu'un deuxième poinçon (5) soit déplacé d'une première position dans une deuxième position enlevant une deuxième nervure résiduelle d'un deuxième tracé de perforation ou de pastille, de telle manière que la deuxième pastille ainsi formée soit réceptionnée sur un côté inférieur du dispositif de réception (4).

7. Procédé selon l'une quelconque des revendications précédentes, **caractérisé en ce que** le dispositif de coupe est commandé par un deuxième dispositif de commande et le deuxième dispositif de commande commande le dispositif de coupe de telle manière que l'étape c) de dressage de la nervure résiduelle soit activée de telle manière que le tracé de contour de perforation ou de pastille s'écarte du contour de perforation ou de pastille dans une région d'extrémité.

8. Dispositif pour la mise en oeuvre d'un procédé selon l'une quelconque des revendications 1 à 7, avec les caractéristiques suivantes:
- un dispositif de coupe, en particulier un dispositif laser, pour la coupe d'un tracé de contour de perforation ou de pastille prévisible (2) dans le profilé creux;
**caractérisé par** les caractéristiques suivantes:
- un dispositif de réception (4) pour recevoir une pastille découpée au moins localement au moyen du dispositif de coupe et enlevée du reste du profilé creux (1) au moyen d'un poinçon (5);
- un premier dispositif de commande pour commander le dispositif de réception (4);
- un deuxième dispositif de commande pour commander le dispositif de coupe, afin de conserver une nervure résiduelle (3) sur le tracé de contour de perforation ou de pastille, de telle manière que la pastille (6) à découper hors du profilé creux (1) reste d'abord dans sa position initiale;
- un troisième dispositif de commande pour commander ledit au moins un poinçon (5).

9. Dispositif selon la revendication 8, **caractérisé en ce que** le dispositif de réception présente au moins une rainure de réception (7) pour recevoir ladite au moins une pastille.

10. Dispositif selon l'une des revendications 8 ou 9, **caractérisé en ce que** le dispositif comprend en outre une unité d'aspiration pour aspirer ladite au moins une pastille hors du dispositif de réception (4).
